Europäisches Patentamt

European Patent Office

Office européen des brevets

(11) Veröffentlichungsnummer: **0 373 551**
**A2**

(12) # EUROPÄISCHE PATENTANMELDUNG

(21) Anmeldenummer: **89122809.0**

(22) Anmeldetag: **11.12.89**

(51) Int. Cl.5: **G05D 16/20, B60T 13/00**

(30) Priorität: **12.12.88 DE 8815426 U**
**12.12.88 DE 8815427 U**

(43) Veröffentlichungstag der Anmeldung:
**20.06.90 Patentblatt 90/25**

(84) Benannte Vertragsstaaten:
**DE ES FR GB IT**

(71) Anmelder: **LUCAS INDUSTRIES public limited
company
Great King Street
Birmingham, B19 2XF West Midlands(GB)**

(72) Erfinder: **Heibel, Helmut
Wiesenstrasse 1
D-5431 Moschheim(DE)**
Erfinder: **Gilles, Leo
Kreisstrasse 14a
D-5400 Koblenz(DE)**

(74) Vertreter: **Goetz, Rupert, Dipl.-Ing. et al
Wuesthoff & Wuesthoff Patent- und
Rechtsanwälte Schweigerstrasse 2
D-8000 München 90(DE)**

(54) **Druckregeleinheit, insbesondere für Bremsanlagen an Kraftfahrzeugen.**

(57) Ein Ventilblock (10) enthält Fluidkanäle (12), Ventile (14) und Anschlüsse (30, 32, 34) für fluidbetätigte Vorrichtungen. Zum Betätigen der Ventile (14) sind Elektromagneten (36) an den Ventilblock (10) angebaut. Auf den Ventilblock (10) ist eine Haube (40) aufgesetzt, welche die Elektromagneten (36) abdeckt. An der Haube (40) ist eine äußere Steckergruppe (42) angeordnet, die von außen zugängliche Stecker (44) zum Anschließen an Sensoren od.dgl. aufweist. Innerhalb der Haube (40) ist eine zweite Steckergruppe (46) mit Steckern (48) angeordnet, die an die Stecker (44) der äußeren Steckergruppe (42) angeschlossen sind. Am Ventilblock (10) ist eine dritte Steckergruppe (50) mit Steckern (52) angeordnet, die durch Aufsetzen der Haube (40) auf den Ventilblock (10) mit den Steckern (48) der zweiten Steckergruppe (46) zusammensteckbar sind. Die Elektromagneten (36) sind mit den Steckern (52) der dritten Steckergruppe (50) durch eine Leiteranordnung (56) verbunden. Die Haube (40) umschließt einen Einbauraum (53) für elektronische Bauelemente.

FIG. 2

## Druckregeleinheit, insbes. für Bremsanlagen an Kraftfahrzeugen

Die Erfindung betrifft eine Druckregeleinheit, insbes. für Bremsanlagen an Kraftfahrzeugen mit
- einem Ventilblock, der Fluidkanäle, Ventile und Anschlüsse für fluidbetätigte Vorrichtungen enthält,
- Elektromagneten, die zum Betätigen der Ventile an den Ventilblock angebaut sind,
- einer Haube, die auf den Ventilblock aufgesetzt ist und die Elektromagneten abdeckt,
- einer äußeren Steckergruppe, die an der Haube angeordnet ist und von außen zugängliche Stecker zum Anschließen an Sensoren od.dgl. aufweist, und
- elektrischen Verbindungen zwischen den Elektromagneten und zugehörigen Steckern an der äußeren Steckergruppe.

Bei einer bekannten Druckregeleinheit dieser Gattung (DE 3701019 Al) sind die Stecker der äußeren Steckergruppe mit den Elektromagnetventilen durch eine Anschlußfolie verbunden, deren Länge so bemessen ist, daß die Haube um ihre der äußeren Steckergruppe benachbarte Kante um bis zu 180° geschwenkt werden kann. Dadurch wird die Möglichkeit geschaffen, die Lötverbindungen zwischen der Anschlußfolie und den in bezug auf die Haube inneren Enden der äußeren Steckergruppe einerseits und mit den Elektromagnetventilen andererseits in einem gemeinsamen Arbeitsgang herzustellen.

Der Erfindung liegt die Aufgabe zugrunde, eine Druckregeleinheit zu schaffen, die sich unterschiedlichen Anforderungen, insbes. beim Einbau in unterschiedlich ausgestattete Kraftfahrzeuge, mit geringem Aufwand anpassen läßt.

Die Aufgabe ist bei einer Ausführungsform der Erfindung ausgehend von einer Druckregeleinheit der eingangs beschriebenen Gattung dadurch gelöst, daß
- innerhalb der Haube eine zweite Steckergruppe mit Steckern angeordnet ist, die an die Stecker der äußeren Steckergruppe angeschlossen sind,
- am Ventilblock eine dritte Steckergruppe mit Steckern angeordnet ist, die durch Aufsetzen der Haube auf den Ventilblock mit den Steckern der zweiten Steckergruppe zusammensteckbar sind,
- die elektrischen Verbindungen eine Leiteranordnung aufweisen, welche die Elektromagneten mit den Steckern der dritten Steckergruppe verbindet, und
- innerhalb der Haube ein Einbauraum für elektronische Bauelemente angeordnet ist.

Bei einer zweiten Ausführungsform der Erfindung ist die Aufgabe, ebenfalls ausgehend von einer Druckregeleinheit der eingangs beschriebenen Gattung, dadurch gelöst, daß
- innerhalb der Haube eine zweite Steckergruppe mit Steckern angeordnet ist, die an die Stecker der äußeren Steckergruppe angeschlossen sind,
- an den Elektromagneten Stecker angeordnet sind, die durch Aufsetzen der Haube auf den Ventilblock mit den Steckern der zweiten Steckergruppe zusammensteckbar sind, und
- innerhalb der Haube ein Einbauraum für elektronische Bauelemente angeordnet ist.

Damit wird erreicht, daß der Ventilblock samt darin einoder angebauten Ventilen, Elektromagneten usw. mit einer Haube gepaart werden kann, die je nach Bedarf aus einer mehr oder weniger großen Anzahl mit elektronischen Bauelementen unterschiedlich bestückter Hauben ausgewählt wird. Auf diese Weise können z.B. Kraftfahrzeuge nach Wahl mit Antiblockiersystemen und/oder Antischlupfregelung unterschiedlicher Regelcharakteristika ausgestattet oder nachträglich umgerüstet werden. Auch Reparaturen werden durch die Erfindung erleichtert.

Vorteilhafte Weiterbildungen sind Gegenstand der Unteransprüche.

Ausführungsbeispiele der Erfindung werden im folgenden anhand schematischer Zeichnungen mit weiteren Einzelheiten beschrieben. Es zeigen:

Fig. 1 eine erste Druckregeleinheit nach der Erfindung in Draufsicht, zur Hälfte bei abgenommener Haube,

Fig. 2 den Schnitt II-II in Fig. 1,

Fig. 3 den Schnitt III-III in Fig. 1,

Fig. 4 die teilweise als Schnitt IV-IV in Fig. 2 dargestellte Seitenansicht,

Fig. 5 eine zweite Druckregeleinheit nach der Erfindung in Draufsicht, zur Hälfte bei abgenommener Haube,

Fig. 6 den Schnitt VI-VI in Fig. 5,

Fig. 7 eine dritte Druckregeleinheit nach der Erfindung in Draufsicht, zur Hälfte bei abgenommener Haube, und

Fig. 8 den Schnitt VIII-VIII in Fig. 7.

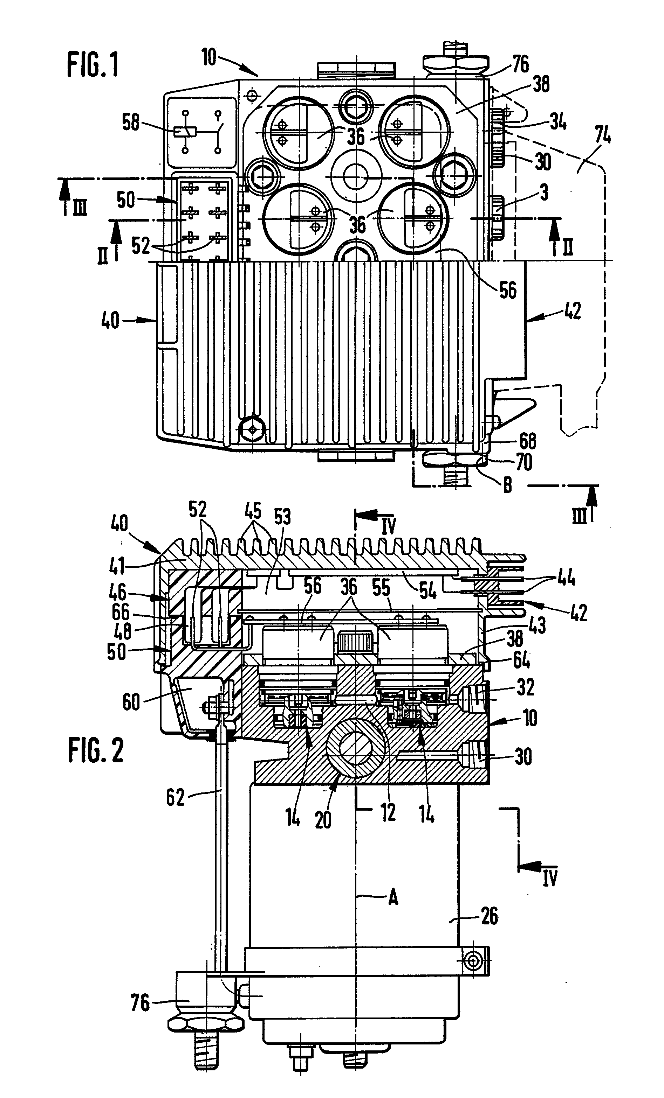

Jede der dargestellten Druckregeleinheiten hat einen Ventilblock 10 mit Kanälen 12, von denen einer als Beispiel in Fig. 2 dargestellt ist. Dieser Kanal 12 ist einem Paar Ventile 14 zugeordnet, die in den Ventilblock 10 eingebaut sind. Insgesamt sind in den Ventilblock 10, parallel zu einer Symmetrieachse A, acht Ventile 14 eingebaut, die paarweise durch je einen Kanal 12 miteinander verbunden und in zwei Gruppen von je vier Ventilen 14 zusammengefaßt sind, wobei jede dieser Gruppen einem von zwei Bremskreisen einer Bremsanlage für ein Kraftfahrzeug zugeordnet sind.

Der Ventilblock 10 weist zwei Entlastungsräume 16 auf, die je einer Gruppe von vier Ventilen zugeordnet sind und je einen federbelasteten Expanderkolben 18 enthalten. Jeder der Entlastungsräume 16 ist mit einer von zwei Pumpen 20 verbunden, die in bezug auf die Symmetrieachse A des Ventilblocks 10 einander diametral gegenüber angeordnet und über einen gemeinsamen Exzenter 22 antreibbar sind. Der Exzenter 22 ist auf der Welle 24 eines Elektromotors 26 gelagert, der an den Ventilblock 10 angebaut ist.

Jede der beiden Pumpen 20 hat die Aufgabe, Bremsflüssigkeit aus dem zugehörigen Entlastungsraum 16 in einen zugehörigen Druckraum 28 zu fördern, der über einen Anschluß 30 mit einem Zweikreis-Hauptbremszylinder verbindbar ist. Von den beiden Ventilpaaren jeder Gruppe von vier Ventilen 14 ist ein Ventilpaar über einen Anschluß 32 mit einem Radbremszylinder einer Vorderradbremse verbindbar, während das andere Ventilpaar derselben Gruppe über einen Anschluß 34 mit einem Radbremszylinder einer Hinterradbremse verbindbar ist. Über die Ventile 14 läßt sich somit der Druck in den Radbremszylindern steuern. Zum Betätigen der Ventile 14 ist jedem von ihnen ein Elektromagnet 36 zugeordnet, der an den Ventilblock 10 angebaut und teilweise in diesen eingebaut ist. Die insgesamt acht Elektromagneten 36 sind durch eine gemeinsame Platte 38 festgehalten, die am Ventilblock 10 festgeschraubt ist.

Der Raum über den Elektromagneten 36 ist durch eine Haube 40 abgeschlossen, die auf den Ventilblock 10 aufgesetzt ist und beispielsweise aus Aluminium besteht. Die Haube 40 hat eine vom Ventilblock 10 abgewandte Stirnwand 41 sowie vier rechtwinklig dazu angeordnete Seitenwände 43. In einer der Seitenwände 43 ist eine äußere langgestreckte Steckergruppe 42 mit einer Vielzahl Stecker 44 eingelassen. Die Stecker 44 lassen sich an Sensoren anschließen, welche die Drehung je eines zugehörigen Fahrzeugrades überwachen. An der Außenseite der Stirnwand 41 und der Seitenwände 43 sind Kühl- und Versteifungsrippen 45 ausgebildet.

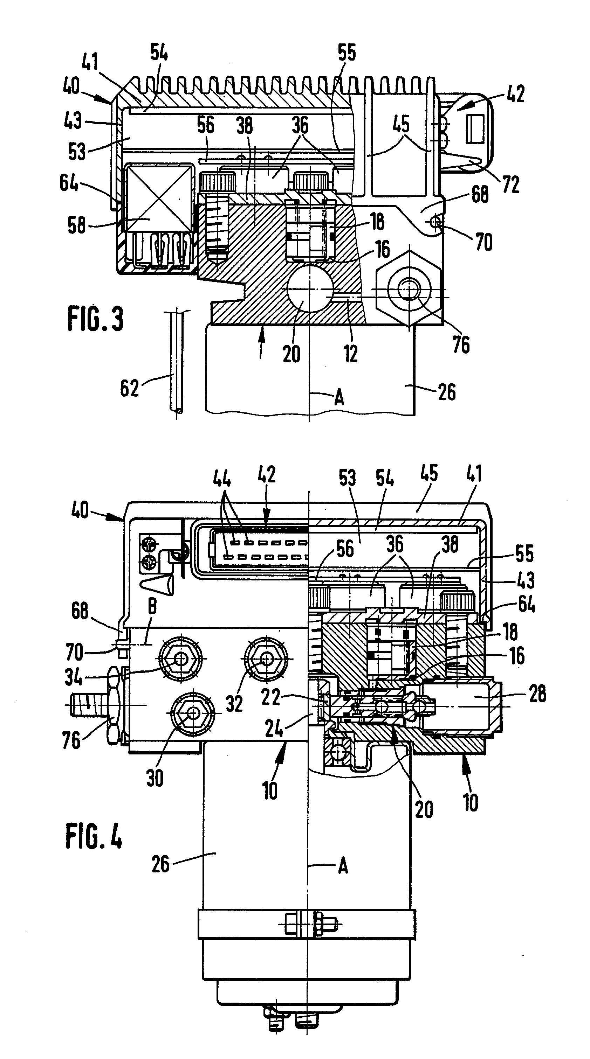

Bei der in Fig. 1 bis 4 dargestellten Ausführungsform erstreckt sich längs derjenigen Seitenwand 43 der Haube 40, die von der äußeren Steckergruppe 42 abgewandt ist, im Inneren der Haube 40 eine zweite langgestreckte Steckergruppe 46, die ebenfalls eine Vielzahl Stecker 48 aufweist. Der zweiten Steckergruppe 46 ist eine dritte langgestreckte Steckergruppe 50 zugeordnet, die am Ventilblock 10 befestigt und mit zu den Steckern 48 komplementären Steckern 52 bestückt ist. Wenn die Haube 40, wie dargestellt, auf dem Ventilblock 10 aufgesetzt ist, greift jeder der Stecker 52 in einen der Stecker 48.

An der Innenseite der Stirnwand 41 der Haube 40 ist gemäß Fig. 1 bis 4 in einem gesonderten Einbauraum 53 ein Mikroprozessor 54 angeordnet und zur Abdichtung in Kunstharz eingegossen. Der Einbauraum 53 ist durch eine Zwischenwand 55 von dem Raum getrennt, der die Elektromagneten 36 enthält. Die Zwischenwand 55 erstreckt sich parallel zur Haubenoberseite und, wie diese, im rechten Winkel zur Symmetrieachse A, und ist in Nuten an der Innenseite der Haube 40 und der zweiten Steckergruppe 46 gehalten. Durch die Zwischenwand 55 ist der Mikroprozessor 54 gegen von den Elektromagneten 36 ausgehende Wärmestrahlung geschützt.

Der Mikroprozessor 54 ist an Stecker 44 der äußeren Steckergruppe 42 sowie an Stecker 48 der zweiten Steckergruppe 46 angeschlossen. Die Elektromagneten 36 sind über eine gemeinsame Leiteranordnung 56 mit je einem Paar Stecker 52 der dritten Steckergruppe 50 festverbunden. Gemäß Fig. 1 bis 4 ist die Leiteranordnung 56 eine Leiterplatte, die sich parallel zur Zwischenwand 55, also ebenfalls normal zur Symmetrieachse A, erstreckt. Einige der Stecker 52 sind mit Relais 58 festverdrahtet, die in einem von Steckern 52 freien Teil der dritten Steckergruppe 50 untergebracht sind.

In der dritten Steckergruppe 50 ist gemäß Fig. 1 bis 4 unterhalb der Stecker 52 und getrennt von diesen eine Klemmenkammer 60 ausgebildet, in der eine Masseanschlußleitung 62 sowie ein Paar nicht dargestellte weitere Leitungen zum Anschluß an die beiden Pole einer Kraftfahrzeugbatterie angeklemmt sind.

Bei allen dargestellten Ausführungsformen erstreckt sich längs des Randes der Haube 40 eine Dichtung 64, die gegen den Ventilblock 10 abdichtet. Für den Fall, daß eines der Ventile 14 undicht wird, ist jedoch in der Haube 40 oder im Ventilblock 10 ein Abflußkanal vorgesehen, damit sich innerhalb der Haube 40 keine größere Menge Bremsflüssigkeit ansammeln kann. Unabhängig von der Dichtung 64 sind die beiden inneren Steckergruppen 46 und 50 durch eine zwischen ihnen angeordnete, gesonderte Dichtung gegen den übrigen Innenraum der Haube 40 abgedichtet, so daß die Stecker 48 und 52 sicher gegen Verschmutzung und Korrosion geschützt sind, solange die Haube 40 auf dem Ventilblock 10 befestigt ist.

Die Haube 40 hat gemäß Fig. 1 bis 4 in der Nähe der äußeren Steckergruppe 42 ein Paar Scharnieransätze 68, die an je einem vom Ventilblock 10 wegragenden Zapfen 70 eingerastet sind. Die beiden Zapfen 70 definieren eine Schwenkachse B, um welche die Haube 40 schwenkbar ist, um geöffnet und geschlossen zu werden. Das Aufschwenken der Haube 40 ist durch einen an ihr ausgebildeten Anschlag 72 auf etwas mehr als 90° begrenzt, so daß beim Aufschwenken der Haube eine in Fig. 1 mit gestrichelten Linien angedeutete Steckereinheit 74, die auf die äußere Steckergruppe 42 aufgesteckt ist, an Ort und Stelle bleiben kann. Wenn die Haube 40, gegebenenfalls zusammen mit der Steckereinheit 74, vollständig vom Ventilblock 10 entfernt werden soll, lassen sich die Scharnieransätze 68 von den Zapfen 70 lösen.

Bei allen dargestellten Druckregeleinheiten sind Gummifederelemente 76 vorgesehen, mit denen der Ventilblock 10 beispielsweise an der Karrosserie eines Kraftfahrzeugs befestigt werden kann.

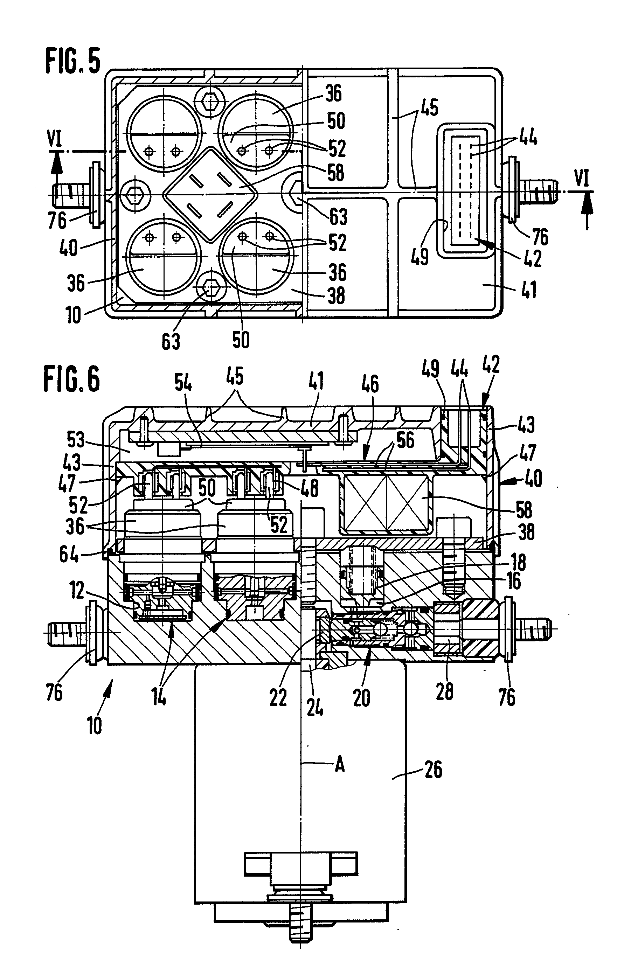

Bei den in Fig. 5 bis 8 dargestellten Druckregeleinheiten erstreckt sich im Inneren der Haube 40 parallel zur Stirnwand 41 eine innere Steckergruppe 46, die plattenförmig flach gestaltet und hinter Vorsprüngen 47 an den Innenwänden der Haube 40 eingerastet ist, und ebenfalls eine Vielzahl Stecker 48 aufweist. Die äußere Steckergruppe 42 ist an der inneren Steckergruppe 46 einstükkig angeformt und durch eine Aussparung 49 in der Stirnwand 41 vom Inneren der Haube 40 her hindurchgesteckt, wodurch die Aussparung 49 dicht abgeschlossen ist.

Die Stecker 48 sind mit je einem der Stecker 44 durch je einen in die Steckergruppe 46 eingearbeiteten Leiter 56 unmittelbar oder mittelbar elektrisch leitend verbunden.

Der inneren Steckergruppe 46 sind Steckerköpfe 50 zugeordnet, die an den Elektromagneten 36 ausgebildet und mit je zwei zu den Steckern 48 komplementären Steckern 52 bestückt sind. Wenn die Haube 40, wie dargestellt, auf dem Ventilblock 10 aufgesetzt ist, greift jeder der Stecker 52 in einen der Stecker 48.

Die innere Steckergruppe 46 teilt innerhalb der Haube 40 einen Raum 53 ab, der von den Elektromagneten 36 getrennt und gegen deren Wärmeabstrahlung geschützt ist. In dem Raum 53 ist an der Innenseite der Stirnwand 41 der Haube 40 ein Mikroprozessor 54 befestigt und zur Abdichtung in Kunstharz eingegossen. Der Mikroprozessor 54 ist an Stecker 44 der äußeren Steckergruppe 42 sowie an Stecker 48 der inneren Steckergruppe 46 angeschlossen. Einige der Stecker 44 sind mit zwei Relais 58 fest verdrahtet, die an der inneren Steckergruppe 46 befestigt sind und in je einen von vier Elektromagneten 36 umschlossenen Raum hineinragen.

Die Haube 40 ist gemäß Fig. 5 bis 8 am Ventilblock 10 mit Schrauben 63 befestigt, die so angeordnet sind, daß jeder Elektromagnet 36 möglichst genau in der Mitte zwischen zwei Schrauben 63 liegt.

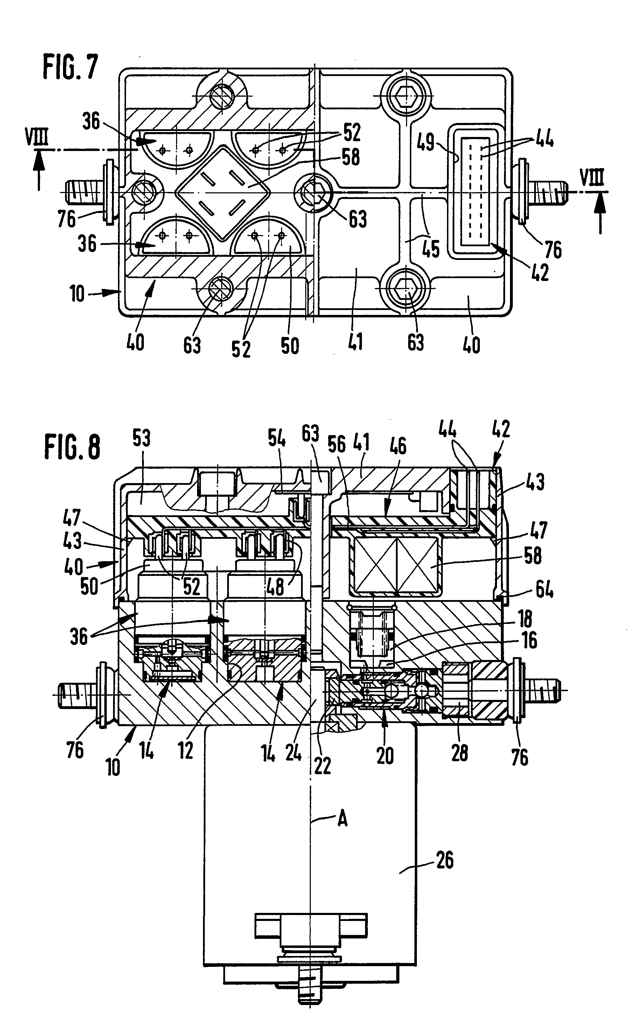

Bei der Ausführungsform gemäß Fig. 7 und 8 ist die Haube 40 so ausgebildet, daß sie selber die Elektromagneten 36 in ihrer Stellung hält; die in Fig. 1 bis 6 dargestellte Platte 38 ist deshalb gemäß Fig. 7 und 8 nicht vorhanden.

## Ansprüche

1. Druckregeleinheit, insbes. für Bremsanlagen an Kraftfahrzeugen, mit
- einem Ventilblock (10), der Fluidkanäle (12), Ventile (14) und Anschlüsse (30, 32, 34) für fluidbetätigte Vorrichtungen enthält,
- Elektromagneten (36), die zum Betätigen der Ventile (14) an den Ventilblock (10) angebaut sind,
- einer Haube (40), die auf den Ventilblock (10) aufgesetzt ist und die Elektromagneten (36) abdeckt,
- einer äußeren Steckergruppe (42), die an der Haube (40) angeordnet ist und von außen zugängliche Stecker (44) zum Anschließen an Sensoren od.dgl. aufweist, und
- elektrischen Verbindungen zwischen den Elektromagneten (36) und zugehörigen Steckern (44) an der äußeren Steckergruppe (42),
dadurch **gekennzeichnet, daß**
- innerhalb der Haube (40) eine zweite Steckergruppe (46) mit Steckern (48) angeordnet ist, die an die Stecker (44) der äußeren Steckergruppe (42) angeschlossen sind,
- am Ventilblock (10) eine dritte Steckergruppe (50) mit Steckern (52) angeordnet ist, die durch Aufsetzen der Haube (40) auf den Ventilblock (10) mit den Steckern (48) der zweiten Steckergruppe (46) zusammensteckbar sind,
- die elektrischen Verbindungen eine Leiteranordnung (56) aufweisen, welche die Elektromagneten (36) mit den Steckern (52) der dritten Steckergruppe (50) verbindet, und
- innerhalb der Haube (40) ein Einbauraum (53) für elektronische Bauelemente angeordnet ist.

2. Druckregeleinheit nach Anspruch 1, dadurch **gekennzeichnet, daß** die äußere Steckergruppe (42) und die zweite Steckergruppe (46) an einen an der Innenseite der Haube (40) angeordneten Mikroprozessor (54) angeschlossen sind.

3. Druckregeleinheit nach Anspruch 1 oder 2, dadurch **gekennzeichnet, daß** die äußere Steckergruppe (42) und die zweite Steckergruppe (46) an einander gegenüberliegenden Seiten der Haube (40) angeordnet sind.

4. Druckregeleinheit nach Anspruch 3, dadurch **gekennzeichnet, daß** die Haube (40) am Ventilblock (10) um eine nahe und parallel zu der äußeren Steckergruppe (42) angeordnete Achse (B) schwenkbar gelagert ist.

5. Druckregeleinheit nach einem der Ansprüche 1 bis 4, dadurch **gekennzeichnet, daß** die zweite und dritte Steckergruppe (46, 50) bei geschlossener Haube (40) gemeinsam gegen den Raum abgedichtet sind, in dem die Elektromagneten (36) angeordnet sind.

6. Druckregeleinheit nach einem der Ansprüche 1 bis 5, dadurch **gekennzeichnet, daß** der Einbauraum (53) durch eine Zwischenwand (55) von den Elektromagneten (36) getrennt ist.

7. Druckregeleinheit nach Anspruch 6,
dadurch **gekennzeichnet,** daß die Zwischenwand (55) in Nuten der Haube (40) und der zweiten Steckergruppe (46) gehalten ist.

8. Druckregeleinheit, insbes. für Bremsanlagen an Kraftfahrzeugen, mit
- einem Ventilblock (10), der Fluidkanäle (12), Ventile (14) und Anschlüsse (30, 32, 34) für fluidbetätigte Vorrichtungen enthält,
- Elektromagneten (36), die zum Betätigen der Ventile (14) an den Ventilblock (10) angebaut sind,
- einer Haube (40), die auf den Ventilblock (10) aufgesetzt ist und die Elektromagneten (36) abdeckt,
- einer äußeren Steckergruppe (42), die an der Haube (40) angeordnet ist und von außen zugängliche Stecker (44) zum Anschließen an Sensoren od.dgl. aufweist, und
- elektrischen Verbindungen zwischen den Elektromagneten (36) und zugehörigen Steckern (44) an der äußeren Steckergruppe (42),
dadurch **gekennzeichnet,** daß
- innerhalb der Haube (40) eine innere Steckergruppe (46) mit Steckern (48) angeordnet ist, die an die Stecker (44) der äußeren Steckergruppe (42) angeschlossen sind,
- an den Elektromagneten (36) Stecker (52) angeordnet sind, die durch Aufsetzen der Haube (40) auf den Ventilblock (10) mit den Steckern (48) der inneren Steckergruppe (46) zusammensteckbar sind, und
- innerhalb der Haube (40) ein Einbauraum (53) für elektronische Bauelemente angeordnet ist.

9. Druckregeleinheit nach Anspruch 8,
dadurch **gekennzeichnet,** daß die äußere Steckergruppe (42) und die innere Steckergruppe (46) an einen an der Innenseite der Haube (40) angeordneten Mikroprozessor (54) angeschlossen sind.

10. Druckregeleinheit nach Anspruch 9,
dadurch **gekennzeichnet,** daß die Haube (40) einen durch die innere Steckergruppe (46) von den Elektromagneten (36) getrennten Raum (53) umschließt, in dem der Mikroprozessor (54) angeordnet ist.

11. Druckregeleinheit nach einem der Ansprüche 8 bis 10,
dadurch **gekennzeichnet,** daß die äußere Steckergruppe (42) und die innere Steckergruppe (46) in einem Stück hergestellt sind.

12. Druckregeleinheit nach einem der Ansprüche 8 bis 11,
dadurch **gekennzeichnet,** daß die innere Steckergruppe (46) durch Einrasten hinter inneren Vorsprüngen (47) der Haube (40) in dieser befestigt ist.

13. Druckregeleinheit nach einem der Ansprüche 8 bis 12,
dadurch **gekennzeichnet,** daß an der inneren Steckergruppe (46) mindestens ein Relais (58) befestigt ist, mit dem ein an den Ventilblock (10) angebauter Elektromotor (26) zum Antreiben von in den Ventilblock (10) eingebauten Pumpen (20) steuerbar ist.

Lucas Ind. p.l.c.
11. Dezember 1989

FIG.1

FIG.2

FIG. 3

FIG. 4

FIG.5

FIG.6

FIG.7

FIG.8